# EUROPÄISCHE PATENTANMELDUNG

(11) **EP 4 372 840 A1**
(43) Veröffentlichungstag der Anmeldung: **22.05.2024**
(21) Anmeldenummer: 23203081.7
(22) Anmeldetag: 11.10.2023
(51) Int. Cl.: H01M 4/139, H01M 4/38, H01M 10/052, H01M 10/0562, H01M 10/058, H01M 50/403, H01M 50/449, H01M 50/46

(54) **AKKUMULATOR UND VERFAHREN ZUR HERSTELLUNG EINES AKKUMULATORS**

(30) Priorität: 17.10.2022 DE 102022210958
(71) Anmelder: VOLKSWAGEN AG, 38440 Wolfsburg (DE)
(72) Erfinder: KUNZE, Miriam, 30926 Seelze (DE); JANSEN, Tobias, 38106 Braunschweig (DE); KOCH, Stephan Leonhard, 38239 Salzgitter (DE)
(74) Vertreter: FDST Patentanwälte

(57) **Zusammenfassung**

Die Erfindung betrifft ein Verfahren zur Herstellung eines Akkumulators (2), welcher zumindest eine Lithium-Ionen-Zelle (4) aufweist, in der eine negative Elektrode (14), eine positive Elektrode (12) und ein fester Elektrolyt (10) angeordnet sind, wobei zur Ausbildung des festen Elektrolyten (10) eine Elektrolyt-Suspension (28) angemischt wird, welche ein Elektrolyt-Material aufweist, wobei mit der Elektrolyt-Suspension (28) eine Grünkörper-Schicht (30) ausgebildet wird und wobei auf die Grünkörper-Schicht (30) eine Schutzschicht (26) aufgebracht wird, die ein Grundelement für eine Lithium-Legierung aufweist.

## Beschreibung

Die Erfindung betrifft ein Verfahren zur Herstellung eines Akkumulators, welcher zumindest eine Lithium-Ionen-Zelle aufweist, in der eine negative Elektrode, eine positive Elektrode und ein fester Elektrolyt angeordnet sind. Außerdem betrifft die Erfindung einen entsprechenden Akkumulator.

Lithium-Ionen-Akkumulatoren sind als Speicher für elektrische Energie weit verbreitet. Sie werden unter anderem auch im Kraftfahrzeugbereich eingesetzt und dienen hier insbesondere als sogenannte Antriebs- oder Traktionsbatterien zum Antrieb von Hybrid- oder Elektrofahrzeugen.

Aktuell im Einsatz sind dabei vor allem Lithium-Ionen-Akkumulatoren mit einem flüssigen Elektrolyten. Bekannt sind jedoch auch Ausführungen mit einem festen Elektrolyten. Ein solcher fester Elektrolyt, auch Festkörperelektrolyt genannt, ist dabei zum Beispiel durch eine Lithium-Ionen-leitende Keramik ausgebildet, welche in einem Sinterprozess hergestellt wird.

Unvorteilhaft ist bei derartigen Festkörperelektrolyten, dass diese eine Instabilität gegenüber Luftfeuchte und gegenüber Luftsauerstoff aufweisen, so dass bei der Herstellung entsprechender Lithium-Ionen-Akkumulatoren zumindest phasenweise in einer Schutzatmosphäre gearbeitet werden muss. Außerdem dampft im Rahmen des Sinterprozesses unvorteilhafterweise ein deutlicher Teil des Lithiums aus dem Material ab, wodurch sich die Lithium-Leitfähigkeit verringert.

Der Erfindung liegt die Aufgabe zugrunde, ein vorteilhaftes Verfahren zur Herstellung eines Ackumulators anzugeben. Außerdem liegt der Erfindung die Aufgabe zugrunde, einen vorteilhaft ausgebildeten Akkumulator anzugeben.

Diese Aufgabe wird durch ein Verfahren mit den Merkmalen des Patentanspruchs 1 und durch einen Akkumulator mit den Merkmalen des Patentanspruchs 10 gelöst. Die im Hinblick auf das Verfahren angeführten Vorteile und bevorzugten Ausgestaltungen sind sinngemäß auch auf den Akkumulator übertragbar und umgekehrt. Vorteilhafte Ausgestaltungen mit zweckmäßigen Weiterbildungen der Erfindung sind in den abhängigen Patentansprüchen angegeben.

Das nachfolgend näher beschriebene erfindungsgemäße Verfahren dient dabei zur Herstellung eines erfindungsgemäßen Akkumulators, welcher als Lithium-Ionen-Akkumulator ausgebildet ist. Ein solcher Akkumulator weist hierbei zumindest eine Lithium-Ionen-Zelle auf. Für eine Vielzahl von Anwendungsfällen weist ein entsprechender Akkumulator jedoch mehrere Lithium-Ionen-Zellen auf, wobei die Lithium-Ionen-Zellen typischerweise gleichartig ausgebildet sind. In einigen Fällen ist der Akkumulator dann als sogenannte Antriebs- oder Traktionsbatterie zum Antrieb eines Hybrid- oder Elektrofahrzeugs ausgebildet.

Eine entsprechende Lithium-Ionen-Zelle, nachfolgend auch kurz Zelle genannt, weist wiederum eine negative Elektrode, eine positive Elektrode und einen festen Elektrolyten, auch Festkörperelektrolyt genannt, auf. Somit ist der Lithium-Ionen-Akkumulator als Lithium-Ionen-Festkörperakkumulator ausgebildet. Je nach Anwendungsfall ist der Lithium-Ionen-Festkörperakkumulator dabei als sogenannter Dünnfilm-Akkumulator oder Dünnfilm-Batterie ausgebildet.

Zur Herstellung der Lithium-Ionen-Zelle und somit auch zur Herstellung des Akkumulators wird nun das nachfolgend näher beschriebene Verfahren angewendet. Dabei wird zur Ausbildung des festen Elektrolyten eine Elektrolyt-Suspension angemischt, welche ein Elektrolyt-Material aufweist und typischerweise zudem ein Bindemittel und/oder ein Lösungsmittel.

Als Elektrolyt-Material kommt hierbei prinzipiell jedes bekannte (Festkörper-)Elektrolyt-Material in Frage. Typischerweise wird dabei ein Material verwendet, das zu den Oxid-Elektrolyten, den Sulfid-Elektrolyten, den Nitrid-Elektrolyten oder den Halogenid-Elektrolyten gezählt wird. Bevorzugt wird jedoch ein Material verwendet, das eine sogenannte LiSICon-Struktur (LiSICon: Lithium Super lonic Conductor), eine NaSICon-Struktur (NaSlCon: Natrium Super lonic Conductor), eine Granat-Struktur, eine Perowskit-Struktur oder eine Anti-Perowskit-Struktur aufweist. Zweckdienliche Elektrolyt-Materialen mit LiSICon-Struktur haben typischerweise die chemische Formel Li₂₊₂ₓZn₁₋ₓGeO₄. Beispiele für Materialien mit NaSlCon-Struktur sind Lithium-Aluminium-Titanphosphate, also Materialien mit der chemischen Formel Li₁₊ₓAlₓTi₂ₓ(PO₄)₃, oder Lithium-Aluminium-Germaniumphosphate, also Materialien mit der chemischen Formel Li₁₊ₓAlₓGe₂ₓ(PO₄)₃. Zweckdienliche Elektrolyt-Materialen mit Granat-Struktur sind zum Beispiel Lithium-Lanthan-Zirkoniumoxid, also Materialien mit der chemischen Formel Li₇La₃Zr₂O₁₂, Lithium-Lanthan-Zirkoniumaluminat sowie Lithium-Lanthan-Zirkoniumtantalat und ein geeignetes Elektrolyt-Material Perowskit-Struktur ist Lithiumlanthantitanat.

Als Bindemittel kommt je nach Anwendungsfall beispielsweise Polyninylbutyral zum Einsatz. Als Lösungsmittel sind typischerweise organische Lösungsmittel zweckdienlich. Bevorzugt kommt ein wasserfreies Lösungsmittel zum Einsatz. In einigen Fällen ist Oppanol ein geeignetes Lösungsmittel oder Isopropanol.

Mit der Elektrolyt-Suspension, welche auch als Schlicker bezeichnet wird, wird dann eine Grünkörper-Schicht (im Englischen: greensheet) ausgebildet, wobei die Elektrolyt-Suspension hierzu beispielsweise auf eine Folie, insbesondere eine Kunststoff-Folie, aufgebracht wird. Die Folie wird hierbei typischerweise vor dem Sintern wieder entfernt und weist je nach Anwendungsfall eine Dicke oder Stärke auf, deren Wert im Bereich 5 µm bis 100 µm liegt. Die Dicke der Grünkörper-Schicht weist bevorzugt einen Wert auf, der im Bereich 5 µm bis 100 µm liegt und insbesondere im Bereich 10 µm bis 60 µm,

Weiter wird auf die Grünkörper-Schicht eine Schutzschicht aufgebracht. Hierbei wird die Schutzschicht bevorzugt direkt, also unmittelbar, auf die Grünkörper-Schicht aufgebracht und dementsprechend ist dann keine weitere Schicht zwischen der Grünkörper-Schicht und der Schutzschicht gegeben. Die Schutzschicht weist dabei ein Grundelement für eine Lithium-Legierung auf. Bei dem Grundelement handelt es sich zum Beispiel um Silicium, Zinn, Arsen, Antimon oder Aluminium. Die Aufbringung der Schutzschicht erfolgt je nach Anwendungsfall derart, dass diese eine Dicke oder Stärke aufweist, die im Bereich 0,5 µm bis 50 µm und insbesondere im Bereich 1 µm bis 40 µm liegt.

Durch die Schutzschicht, die typischerweise auf einer Oberseite der Grünkörper-Schicht aufgebracht wird, ist die Grünkörper-Schicht, also zumindest die Oberseite der Grünkörper-Schicht, nachfolgend geschützt, insbesondere vor Luftfeuchtigkeit und Luftsauerstoff. Dies ist für nachfolgende Verfahrensschritte von Vorteil.

Nach dem Aufbringen der Schutzschicht erfolgt in einigen Fällen eine Trocknung, bei der die Schichtung, die die Grünkörper-Schicht und die Schutzschicht aufweist, getrocknet wird. Unabhängig davon, ob eine solche Trocknung erfolgt oder nicht, wird die Grünkörper-Schicht im Zuge des Verfahrens bevorzugt zusammen mit der Schutzschicht gesintert, sodass aus der Grünkörper-Schicht der feste Elektrolyt gebildet wird. D. h., dass die zuvor genannte Schichtung einem Sinterprozess unterzogen wird. Kommt eine zuvor genannte Folie zum Einsatz, auf die die Grünkörper-Schicht aufgetragen wird, so wird diese Folie typischerweise vor dem Sintern entfernt.

Von Vorteil ist es weiter, wenn die negative Elektrode ausgebildet oder fertig ausgebildet wird, indem dem Grundelement der Schutzschicht Lithium zugeführt wird, sodass sich eine Lithium-Legierung ausbildet, welche nachfolgend als negative Elektrode oder Anode dient. Dazu wird bevorzugt eine Art Formationsprozess, auch kurz Formation genannt, genutzt.

Im Zuge dieses Formationsprozesses wird mittels einer elektrischen Spannung Lithium aus dem festen Elektrolyten hin zur Schutzschicht geleitet, wodurch sich aus dem Grundelement und dem Lithium die Lithium-Legierung ausbildet. Jener Formationsprozesses wird hierbei typischerweise durchgeführt, nachdem der feste Elektrolyt mit der Schutzschicht und der positiven Elektrode in einem Gehäuse oder in einer Umhüllung der Lithium-Ionen-Zelle angeordnet wurde. Unabhängig davon, ob der Formationsprozess innerhalb oder außerhalb eines solchen Gehäuses oder einer solchen Umhüllung durchgeführt wird, dient bevorzugt die positive Elektrode oder Kathode im Formationsprozess als Lithium-Quelle für den festen Elektrolyten. D. h., dass aus der positiven Elektrode in den festen Elektrolyten Lithium oder vielmehr Lithium-Ionen nachgeliefert werden. Somit wird der feste Elektrolyt typischerweise nicht ausgelaugt.

Je nach Anwendungsfall wird im Zuge der Formation nicht nur eine Lithium-Legierung ausgebildet, sondern zudem auch eine Lithiumschicht, nämlich zwischen der Lithium-Legierung und dem festen Elektrolyten. In diesem Fall bilden dann die Lithiumschicht und die Lithium-Legierung eine Hybrid-Elektrode aus, welche nachfolgend als negative Elektrode oder Anode dient. Dabei lässt sich dieser Prozess typischerweise steuern durch die Menge an Legierungsmaterial und/oder durch die Dauer der Formation. Im Zuge des Prozesses erfolgt dann zuerst die Bildung der Lithium-Legierung und wenn das Legierungsmaterial quasi aufgebraucht ist, geht es mit Abscheidung des reinen Lithium-Metalls weiter. Alternativ oder zusätzlich lässt sich der Prozess üblicherweise auch über die Stromstärke steuern. Die Stromstärke bestimmt dabei die Geschwindigkeit des Abscheidungsprozesses. Eine allzu hohe Stromstärke ist jedoch typischerweise nicht gewünscht, da in hierdurch starke Relaxationseffekte auftauchen können, die dann unkontrolliert ablaufen.

Wie bereits zuvor dargelegt wird im Zuge des Verfahrens die Schutzschicht auf die Grünkörper-Schicht aufgebracht. Zweckdienlich ist dabei eine Verfahrensvariante, bei der hierzu eine Grundelement-Suspension angemischt wird, welche das Grundelement aufweist. Das Grundelement liegt hierbei dann in der Grundelement-Suspension typischerweise in Form von Partikeln vor. Jene Partikel, also die Grundelement-Partikel, weisen dabei zweckdienlicherweise eine mittlere Größe auf, die im Bereich 50 nm bis 10 µm und insbesondere im Bereich 200 nm bis 5 µm liegt. Davon abgesehen ist in der Regel ist ein Bindemittel und/oder ein Lösungsmittel Teil der Grundelement-Suspension, wobei üblicherweise dieselben Bindemittel und Lösungsmittel zum Einsatz kommen wie im Falle der Elektrolyt-Suspension. Jene Grundelement-Suspension wird dann zur Ausbildung der Schutzschicht auf die Grünkörper-Schicht aufgetragen, und zwar insbesondere durch ein klassisches Beschichtungsverfahren, also beispielsweise durch Aufdrucken oder Aufspritzen.

Einer alternativen Verfahrensvariante entsprechend wird zur Ausbildung der Schutzschicht auf die Grünkörper-Schicht ein Grundelement-Pulver aufgebracht oder eine Folie, die das Grundelement aufweist oder aus dem Grundelement ausgebildet ist.

Davon unabhängig wird die Schutzschicht, wie zuvor bereits angedeutet, bevorzugt auf der Oberseite der Grünkörper-Schicht aufgebracht. Die Aufbringung erfolgt dabei in einigen Fällen derart, dass die aufgebrachte Schutzschicht die Oberseite der Grünkörper-Schicht vollständig abdeckt. Einer alternativen Ausführung entsprechend wird lediglich eine Teilfläche auf der Oberseite durch die Schutzschicht abgedeckt. Um eine solche Teilabdeckung zu erreichen wird dann zum Beispiel für die Auftragung der Schutzschicht eine Maske oder ein Hilfs-Rahmen, also eine Art Schablone, auf die Grünkörper-Schicht aufgelegt. Eine solche Maske oder ein solcher Hilfs-Rahmen ist beispielsweise aus einem Kunststoff oder einem Metall, insbesondere Edelstahl, gefertigt und wird nach dem Auftragen üblicherweise wieder entfernt. Wird eine zuvor genannte Grundelement-Suspension aufgetragen, so bestimmt typischerweise die Viskosität der Grundelement-Suspension, ob für die Realisierung einer Teilbeschichtung eine solche Maske oder ein solcher Hilfs-Rahmen genutzt wird.

Weiter werden je nach Anwendungsfall das Grundelement und das Elektrolyt-Material so gewählt, dass das Grundelement einen Schmelzpunkt aufweist, der höher ist als die Sinter-Temperatur des Elektrolyt-Materials. Auf diese Weise lässt sich dann zum Beispiel das Risiko reduzieren, dass es zu einer Reaktion zwischen dem Grundelement und dem Elektrolyt-Material kommt. Liegt zudem das Grundelement in der Grundelement-Suspension in Form von Partikeln vor, so bleibt diese Partikelform typischerweise bis nach dem Sinterprozess erhalten. Auf diese Weise lässt sich dann mit dem Grundelement auch eine poröse Struktur ausbilden.

Alternativ werden das Grundelement und das Elektrolyt-Material so gewählt, dass das Grundelement einen Schmelzpunkt aufweist, der niedriger ist als die Sinter-Temperatur des Elektrolyt-Materials. In diesem Fall verflüssigt sich dann das Grundelement in der Schutzschicht während dem Sinterprozess.

Zweckdienlich sind weiterhin Verfahrensvarianten, bei denen vor dem Sintern ein sogenannter Stromsammler auf die Schutzschicht aufgebracht wird. Bei jenem Stromsammler handelt es sich typischerweise um eine Metallfolie, insbesondere aus Nickel, die auf die Schutzschicht aufgelegt und/oder aufgedrückt wird. Ist ein zuvor beschriebenes Trocknen der Schichtung, welche die Grünkörper-Schicht und die Schutzschicht aufweist, vorgesehen, so erfolgt das Aufbringen des Stromsammlers weiter bevorzugt vor dem Trocknen. Davon unabhängig weist ein solcher Stromsammler bevorzugt eine Stärke oder Dicke auf, deren Wert im Bereich 4 µm bis 20 µm liegt.

In vorteilhafter Weiterbildung erfolgt das Aufbringen des Stromsammlers unter Verzicht auf ein zusätzliches Bindemittel. D. h., dass insbesondere auf ein Adhäsionsmittel, wie zum Beispiel ein Klebstoff, verzichtet wird.

Einer alternativen Ausführungsvariante entsprechend wird ein entsprechender Stromsammler nach dem Sinterprozess aufgebracht. Auch in diesem Fall ist der Stromsammler typischerweise durch eine Metallfolie ausgebildet. Jedoch wird in diesem Fall üblicherweise ein Bindemittel der zuvor genannten Art eingesetzt, um den Stromsammler an der Schutzschicht zu fixieren. Außerdem besteht die Metallfolie dann typischerweise aus einem Metall mit wesentlich geringerer Schmelztemperatur als Nickel, also zum Beispiel aus Aluminium.

Wie bereits zuvor beschrieben wird die Schutzschicht typischerweise auf die Oberseite der Grünkörper-Schicht aufgebracht und die Grünkörper-Schicht wird in der Folge zusammen mit der Schutzschicht gesintert, sodass aus der Grünkörper-Schicht der feste Elektrolyt ausgebildet wird. Nachfolgend ist dann die Oberseite des festen Elektrolyten durch die Schutzschicht geschützt. In vorteilhafter Weiterbildung wird dann auf eine der Oberseite gegenüberliegende Unterseite des festen Elektrolyten zur Ausbildung der positiven Elektrode oder Kathode eine Elektroden-Suspension aufgebracht. Es wird also zur Ausbildung der positiven Elektrode eine Elektroden-Suspension angemischt, welche ein Elektroden-Material aufweist, und diese Elektroden-Suspension wird dann auf den festen Elektrolyten aufgebracht zur Ausbildung einer Elektroden-Schicht, welche schließlich die positive Elektrode ausbildet.

Als Elektroden-Material zur Ausbildung der positiven Elektrode kommt je nach Anwendungsfall zum Beispiel ein Lithium-Metalloxid zum Einsatz, wie zum Beispiel Lithium-Manganoxid, oder es wird beispielsweise eine Lithium-Nickel-Mangan-Legierung verwendet. Das Elektroden-Material liegt hierbei dann in der Elektroden-Suspension typischerweise in Form von Partikeln vor. Jene Partikel, also die Elektroden-Partikel, weisen dabei zweckdienlicherweise eine mittlere Größe auf, die im Bereich 2 µm (von Primärpartikeln) bis 25 µm (von Sekundärpartikeln) liegt. Davon abgesehen ist in der Regel ein Bindemittel, beispielsweise PVDF, und/oder ein Lösungsmittel, zum Beispiel N-Methylpyrrolidon, Teil der Elektroden-Suspension. Jene Elektroden-Suspension wird dann zur Ausbildung der Elektroden-Schicht auf den festen Elektrolyten aufgetragen, und zwar insbesondere durch ein klassisches Beschichtungsverfahren, also beispielsweise durch Aufdrucken oder Aufspritzen.

Davon unabhängig wird die Elektroden-Schicht, wie zuvor bereits angedeutet, bevorzugt auf der Unterseite des festen Elektrolyten aufgebracht. Die Aufbringung erfolgt dabei bevorzugt derart, dass die aufgebrachte Elektroden-Schicht die Unterseite des festen Elektrolyten vollständig abdeckt. Einer alternativen Ausführung entsprechend wird lediglich eine Teilfläche auf der Unterseite durch die Elektroden-Schicht abgedeckt. Um eine solche Teilabdeckung zu erreichen, wird dann zum Beispiel für die Auftragung der Elektroden-Schicht ein Hilfs-Rahmen, also eine Art Schablone, auf den festen Elektrolyten aufgelegt.

Außerdem wird die Elektroden-Suspension vorzugsweise aufgebracht, bevor der feste Elektrolyt nach dem Sinterprozess wieder vollständig abgekühlt ist. D. h., dass der feste Elektrolyt beim Auftragen der Elektroden-Suspension typischerweise eine Temperatur aufweist, deren Wert im Bereich 50 °C bis 150 °C liegt. Zudem bevorzugt erfolgt nach der Auftragung der Elektroden-Suspension eine Trocknung, wobei in diesem Fall durch die Trocknung aus der Elektroden-Schicht die fertige positive Elektrode gebildet wird.

Weiter wird nach dem Auftragen der Elektroden-Suspension oder nach der zuvor genannten Trocknung der Elektroden-Schicht typischerweise auf die Elektroden-Schicht oder die fertige positive Elektrode ein Stromsammler aufgebracht. Jener Stromsammler ist typischerweise durch eine Metallfolie ausgebildet. Werden auf die Schutzschicht und Elektroden-Schicht bzw. fertige positive Elektrode jeweils Elektronensammler aufgebracht, so sind die Elektrodensammler üblicherweise gleichartig ausgestaltet, bestehen also insbesondere aus demselben Material.

Mit dem zuvor beschriebenen Verfahren wird nun vorzugsweise ein Basiselement hergestellt, das den festen Elektrolyten aufweist, welcher auf einer ersten Seite mit der Schutzschicht und auf einer zweiten, gegenüberliegenden Seite mit der positiven Elektrode beschichtet ist. Der feste Elektrolyt, die Schutzschicht und die positive Elektrode sind somit Teil des Basiselements. Dieses Basiselement umfasst je nach Anwendungsfall zudem einen oder zwei Stromsammler, also einen Stromsammler, der auf der Schutzschicht aufgebracht ist, und/oder einen Stromsammler, der auf der positiven Elektrode aufgebracht ist.

Dieses Basiselement wird typischerweise zur Ausbildung der Lithium-Ionen-Zelle in ein Gehäuse oder eine Umhüllung eingebracht. In der Folge wird dann bevorzugt die zuvor beschriebene Formation, also der Formationsprozess, ausgeführt, um die negative Elektrode auszubilden oder fertig auszubilden.

In einigen Anwendungsfällen wird das Basiselement zuvor, also vor der Einbringung in ein Gehäuse oder in eine Umhüllung, erweitert, indem an diesem Basiselement weitere Schichten der zuvor genannten Art und gegebenenfalls weitere Stromsammler angebracht werden. Auf diese Weise lässt sich dann zum Beispiel eine bipolare Lithium-lonen-Zelle herstellen.

Das zuvor beschriebene Verfahren bietet verschiedene Vorteile. So verhindert die Schutzschicht, dass die darunter liegende Oberfläche der Grünkörper-Schicht bzw. des festen Elektrolyten in Kontakt mit Luftsauerstoff oder Luftfeuchte kommt. Gleiches gilt für die Elektroden-Schicht bzw. die fertige positive Elektrode. Hierdurch kann zumindest bei einzelnen Verfahrensschritten auf die Nutzung einer Schutzatmosphäre oder Inertgasatmosphäre verzichtet werden und bevorzugt wird dann auch auf eine solche Nutzung verzichtet.

Typischerweise wird zumindest bei allen Verfahrensschritten auf die Nutzung einer Schutzatmosphäre oder Inertgasatmosphäre verzichtet, die sich an die Auftragung der Schutzschicht anschließen, oder zumindest bei allen Verfahrensschritten, die sich an die Auftragung Elektroden-Schicht anschließen. Alternativ wird zumindest bei allen Verfahrensschritten auf die Nutzung einer Schutzatmosphäre oder Inertgasatmosphäre verzichtet, die sich an Sinterprozess anschließen. Weiter bevorzugt wird während der Ausführung aller Verfahrensschritte des Verfahrens auf die Nutzung einer Schutzatmosphäre oder Inertgasatmosphäre verzichtet, also insbesondere während der Ausführung aller zuvor beschriebenen Verfahrensschritte.

Weiter verhindert die Schutzschicht beim Sinterprozess, das Lithium durch ein eingangs beschriebenes Abdampfen verloren geht. Auf die Nutzung sogenannter Schutzplatten während dem Sinterprozess kann daher verzichtet werden und es wird typischerweise auch darauf verzichtet.

Da die ausgebildete Schutzschicht nicht wieder entfernt wird, sondern im Verlaufe des Verfahrens quasi in die negative Elektrode umgewandelt wird, wird weiter eine gleichmäßige Oberfläche für den festen Elektrolyten realisiert und zudem eine homogene Ausbildung der negativen Elektrode an dieser Oberfläche. Dadurch fällt eine sonst übliche zusätzliche Oberflächenbehandlung des festen Elektrolyten weg.

Die im Zusammenhang mit dem Verfahren beschriebenen Vorteile und Weiterbildungen sind sinngemäß auch auf den Akkumulator zu übertragen und umgekehrt.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Darin zeigen:
- Fig. 1: in einer vereinfachten Seitenansicht ein Akkumulator mit mehreren Lithium-Ionen-Zellen,
- Fig. 2: in einer vereinfachten Schnittdarstellung eine Lithium-Ionen-Zelle,
- Fig. 3: in einer vereinfachten Seitenansicht eine erste Fertigungsstraße zur Herstellung einer Komponente für die Lithium-Ionen-Zelle, und
- Fig. 4: in einer vereinfachten Seitenansicht eine zweite Fertigungsstraße zur Herstellung der Komponente für die Lithium-Ionen-Zelle.

Einander entsprechende Teile sind in allen Figuren mit den gleichen Bezugszeichen versehen.

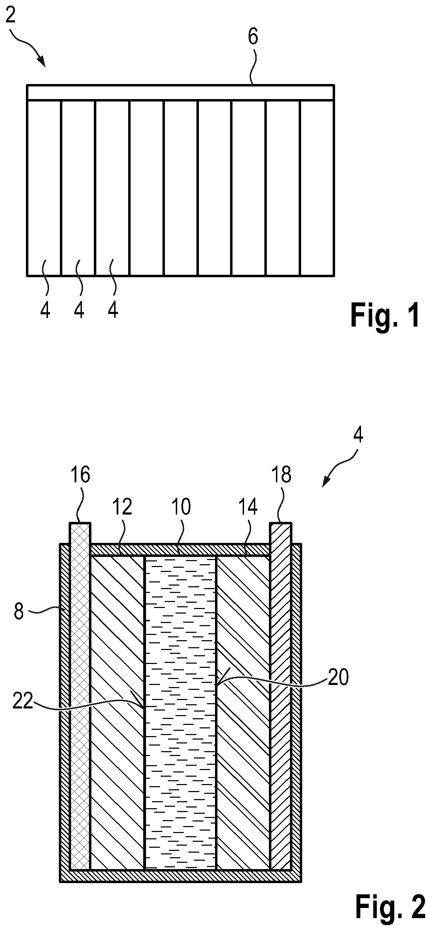

Ein nachfolgend exemplarisch beschriebenes Verfahren dient zur Herstellung eines Akkumulators 2, welcher als Lithium-Ionen-Akkumulator 2 ausgebildet ist. Ein solcher Akkumulator 2 weist in vielen Anwendungsfällen mehrere einheitlich ausgestaltete Lithium-lonen-Zellen 4 oder kurz Zellen 4 auf. Die entsprechenden Zellen 4 sind dabei dann üblicherweise im Akkumulator 2 über eine Verschaltungseinrichtung 6 in nicht näher dargestellter Weise miteinander verschaltet. Dies ist in Fig. 1 angedeutet.

In jedem Fall aber weist ein solcher Akkumulator 2 zumindest eine Zelle 4 auf und eine mögliche Ausführung einer derartigen Zelle 4 ist in Fig. 2 in einer vereinfachten Schnittdarstellung gezeigt. Sie weist dabei ein Zellgehäuse 8 auf, in dem ein fester Elektrolyt 10, eine positive Elektrode 12 und eine negative Elektrode 14 angeordnet sind. Zudem weist die Zelle 4 zwei aus Metallfolien gebildete Stromsammler 16,18 auf, nämlich einen Stromsammler 16, der an der positiven Elektrode 12 fixiert ist, und einen Stromsammler 18, der an der negativen Elektrode 14 fixiert ist.

Der feste Elektrolyt 10, die positive Elektrode 12 und die negative Elektrode 14 sind weiter durch einen fertigen Schichtverbund aus drei miteinander verbundenen Schichten ausausgebildet. Dabei ist dann der feste Elektrolyt 10 auf einer ersten Seite, nachfolgend Oberseite 20 genannt, mit der negativen Elektrode 14 verbunden und auf einer zweiten, gegenüberliegenden Seite, nachfolgend Unterseite 22 genannt, mit der positiven Elektrode 12.

Der fertige Schichtverbund wird im Ausführungsbeispiel im Zuge einer Formation aus einem unfertigen Schichtverbund hergestellt. Dieser unfertige Schichtverbund wird gebildet durch den festen Elektrolyten 10, die positive Elektrode 12 und eine Schutzschicht 26, die sich an die Oberseite 20 des festen Elektrolyten 10 anschließt. Dabei wird der unfertige Schichtverbund zunächst vorgefertigt und es werden die Stromsammler 16,18 an diesem unfertigen Schichtverbund fixiert, also beispielsweise mittels eines Klebstoffs angeklebt. In der Folge wird der unfertige Schichtverbund zusammen mit den Stromsammlern 16,18 in das Zellgehäuse 8 eingebracht und in einem späteren Verfahrensschritt wird die Formation durchgeführt.

Im Zuge der Formation wird mittels einer elektrischen Spannung, die an die Stromsammler 16,18 angelegt wird, Lithium aus dem festen Elektrolyten 10 hin zur Schutzschicht 26 geleitet, wodurch sich aus einem Grundelement in der Schutzschicht 26 und dem Lithium eine Lithium-Legierung ausbildet. Diese Lithium-Legierung fungiert nachfolgend als negative Elektrode 14. Somit entsteht die fertige Schichtung aus der unfertigen Schichtung, indem die Schutzschicht 26 in die negative Elektrode 14 umgewandelt wird.

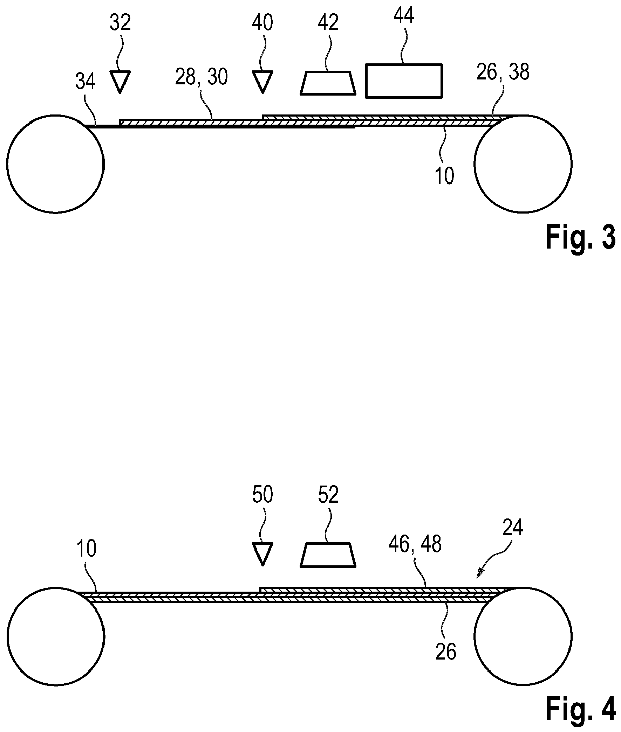

Wie bereits zuvor erwähnt, wird der unfertige Schichtverbund vorgefertigt. Die Herstellung des unfertigen Schichtverbunds erfolgt dabei im Ausführungsbeispiel derart, dass zunächst ein Materialband 24 hergestellt wird. Dies ist in Fig. 3 und Fig. 4 angedeutet. Aus dem Materialband 24 wird dann der unfertige Schichtverbund im Zuge eines nicht dargestellten Trennvorgangs herausgetrennt.

Zur Herstellung des Materialbands 24 wird zunächst eine Elektrolyt-Suspension 28 angemischt, welche ein Elektrolyt-Material aufweist, zum Beispiel ein Elektrolyt-Material mit ein Granat-Struktur, also ein Material mit der chemischen Formel Li₇La₃Zr₂O₁₂, oder ein Elektrolyt-Material mit einer NaSICon-Struktur, also ein Material mit der chemischen Formel Li₁₋ₓAlₓTi₂ₓ(PO₄)₃. Mit der Elektrolyt-Suspension 28 wird dann eine Grünkörper-Schicht 30 ausgebildet, indem die Elektrolyt-Suspension 28 beispielsweise mittels eines ersten Spritzkopfes 32 auf eine Folie 34 aufgespritzt wird.

Weiter wird auf die Grünkörper-Schicht 30 die Schutzschicht 26 aufgebracht. Dazu wird zunächst eine Grundelement-Suspension 38 angemischt, welche das Grundelement aufweist, zum Beispiel Silicium. Mit der Grundelement-Suspension 38 wird dann die Schutzschicht 26 ausgebildet, indem diese beispielsweise mittels eines zweiten Spritzkopfes 40 auf die Grünkörper-Schicht 30 aufgespritzt wird.

Durch die Schutzschicht, die auf der Oberseite 20 der Grünkörper-Schicht 30 aufgebracht wird, ist die Grünkörper-Schicht 30, also zumindest die Oberseite 20 der Grünkörper-Schicht 30, nachfolgend geschützt, insbesondere vor Luftfeuchtigkeit und Luftsauerstoff.

Nach dem Aufbringen der Schutzschicht 26 erfolgt im Ausführungsbeispiel eine Trocknung, bei der die Schichtung, die die Grünkörper-Schicht 30 und die Schutzschicht 26 aufweist, getrocknet wird. Hierzu wird zum Beispiel ein Heizstrahler 42 verwendet.

In einem weiteren Verfahrensschritt wird die Grünkörper-Schicht 30 zusammen mit der Schutzschicht 26 gesintert, sodass aus der Grünkörper-Schicht 30 der feste Elektrolyt 10 gebildet wird. D. h., dass die zuvor genannte Schichtung einem Sinterprozess unterzogen wird. Der Sinterprozess wird dabei im Ausführungsbeispiel mittels eines Ofens 44 durchgeführt und die zuvor genannte Folie 34, auf die die Grünkörper-Schicht 30 aufgetragen wurde, wird vor dem Sintern entfernt.

Die zuvor beschriebenen Verfahrensschritte zur Herstellung des Materialbands 24 laufen im Ausführungsbeispiel in einem sogenannten Rolle-zu-Rolle-Prozess ab, der in Fig. 3 angedeutet ist. Für die nachfolgend beschriebene Verfahrensschritte wird dann bevorzugt ein weiterer, in Fig. 4 skizzierter Rolle-zu-Rolle-Prozess genutzt, bei dem das Materialband 24 fertiggestellt wird.

Im Zuge des weiterer Rolle-zu-Rolle-Prozesses wird zur Ausbildung der positiven Elektrode 12 auf die Unterseite 22 des festen Elektrolyten 10 eine Elektroden-Suspension 46 aufgebracht. Hierzu wird eine Elektroden-Suspension 46 angemischt, welche ein Elektroden-Material aufweist, typischerweise ein Lithium-Metalloxid, wie zum Beispiel Lithium-Manganoxid. Mit der Elektroden-Suspension 46 wird dann die Elektroden-Schicht 48 ausgebildet, indem diese beispielsweise mittels eines dritten Spritzkopfes 40 die Unterseite 22 des festen Elektrolyten 10 aufgespritzt wird.

Nach dem Aufbringen der Elektroden-Schicht 48 erfolgt im Ausführungsbeispiel eine Trocknung, bei der die Elektroden-Schicht 48 getrocknet wird. Hierzu wird zum Beispiel ein Heizstrahler 52 verwendet.

### Bezugszeichenliste

- 2: Akkumulator
- 4: Lithium-lonen-Zelle
- 6: Verschaltungseinrichtung
- 8: Zellgehäuse
- 10: Elektrolyt
- 12: positive Elektrode
- 14: negative Elektrode
- 16: Stromsammler
- 18: Stromsammler
- 20: Oberseite
- 22: Unterseite
- 24: Materialband
- 26: Schutzschicht
- 28: Elektrolyt-Suspension
- 30: Grünkörper-Schicht
- 32: erster Spritzkopf
- 34: Folie
- 38: Grundelement-Suspension
- 40: zweiter Spritzkopf
- 42: Heizstrahler
- 44: Ofen
- 46: Elektroden-Suspension
- 48: Elektroden-Schicht
- 50: dritter Spritzkopf
- 52: Heizstrahler

## Patentansprüche

1. Verfahren zur Herstellung eines Akkumulators (2), welcher zumindest eine Lithium-lonen-Zelle (4) aufweist, in der eine negative Elektrode (14), eine positive Elektrode (12) und ein fester Elektrolyt (10) angeordnet sind,
wobei
- zur Ausbildung des festen Elektrolyten (10) eine Elektrolyt-Suspension (28) angemischt wird, welche ein Elektrolyt-Material aufweist,
- mit der Elektrolyt-Suspension (28) eine Grünkörper-Schicht (30) ausgebildet wird und
- auf die Grünkörper-Schicht (30) eine Schutzschicht (26) aufgebracht wird, die ein Grundelement für eine Lithium-Legierung aufweist.

2. Verfahren nach Anspruch 1,
wobei die Grünkörper-Schicht (30) zusammen mit der Schutzschicht (26) gesintert wird, so dass aus der Grünkörper-Schicht (30) der feste Elektrolyt (10) gebildet wird.

3. Verfahren nach Anspruch 1 oder 2,
wobei die negative Elektrode (14) bei einer Formation ausgebildet wird, indem mittels einer elektrischen Spannung Lithium aus dem festen Elektrolyten (10) hin zur Schutzschicht (26) geleitet wird, so dass sich aus dem Grundelement und dem Lithium eine Lithium-Legierung ausbildet.

4. Verfahren nach einem der Ansprüche 1 bis 3,
wobei eine Grundelement-Suspension (38) angemischt wird, welche das Grundelement aufweist, und wobei die Grundelement-Suspension (38) zur Ausbildung der Schutzschicht (26) auf die Grünkörper-Schicht (30) aufgetragen wird.

5. Verfahren nach einem der Ansprüche 1 bis 4,
wobei das Grundelement und das Elektrolyt-Material so gewählt werden, dass das Grundelement einen Schmelzpunkt aufweist, der höher ist als die Sintertemperatur des Elektrolyt-Materials.

6. Verfahren nach einem der Ansprüche 1 bis 5,
wobei die Grünkörper-Schicht (30) zusammen mit der Schutzschicht (26) gesintert wird und wobei vor dem Sintern ein Stromsammler (18) auf die Schutzschicht (26) aufgebracht wird.

7. Verfahren nach Anspruch 6,
wobei der Stromsammler (18) durch eine Metall-Folie ausgebildet ist und wobei die Metall-Folie unter Verzicht auf ein zusätzliches Bindemittel aufgebracht wird.

8. Verfahren nach einem der Ansprüche 1 bis 7,
wobei die Grünkörper-Schicht (30) zusammen mit der Schutzschicht (26) gesintert wird, so dass aus der Grünkörper-Schicht (30) der feste Elektrolyt (10) gebildet wird, wobei zur Ausbildung der positiven Elektrode (12) eine Elektroden-Suspension (46) angemischt wird, welche ein Elektroden-Material aufweist, und wobei mit der Elektroden-Suspension (46) eine Elektroden-Schicht (48) auf den festen Elektrolyten (10) aufgebracht wird.

9. Verfahren nach einem der Ansprüche 1 bis 8,
wobei bei der Herstellung auf eine Nutzung einer Schutzatmosphäre verzichtet wird.

10. Akkumulator (2) aufweisend zumindest eine Lithium-Ionen-Zelle (4), in der eine negative Elektrode (14), eine positive Elektrode (12) und ein fester Elektrolyt (10) angeordnet sind, und hergestellt durch ein Verfahren nach einem der vorherigen Ansprüche.
